# EUROPEAN PATENT APPLICATION

(11) **EP 4 617 926 A1**
(43) Date of publication of application: **17.09.2025**
(21) Application number: 24163915.2
(22) Date of filing: 15.03.2024
(51) Int. Cl.: G06F 21/31, H04L 9/40, H04W 12/68

(54) **SYSTEM AND METHOD FOR DETECTING ACCESS VIOLATIONS IN A COMPUTER SIMULATED ENVIRONMENT**

(71) Applicant: Siemens Aktiengesellschaft, 80333 München (DE)
(72) Inventor: KUNDU, Ricktam, 110045 New Delhi, Delhi (IN); MONDAL, Chittapriya, 560061 Bangalore, Karnataka (IN); RAJ, Arun, 635110 Hosur, Tamil Nadu (IN)
(74) Representative: HKW Intellectual Property PartG mbB

(57) **Abstract**

Disclosed is a system (100, 500) and method (400) for detecting access violations in a computer simulated environment (102). The method comprises authenticating, by a processing unit (302), a user-device pair connection in the computer simulated environment pertaining to the user (502) and the corresponding device (504) based on a user identity registry (112) and a device identity registry (114) respectively and a predefined mapping therebetween; continuously verifying, by the processing unit (302), the user-device pair connection for a time period when the user is connected to the computer simulated environment based on behavioral data of the user acquired from one or more sensors on the device (504); and detecting an access violation in the computer simulated environment when either the authentication of the user-device pair fails or the continuous authentication of the user-device pair connection fails.

## Description

The present invention relates to a field of computer simulated environments and more particularly relates to a system and method for detecting access violations of virtual assets in a computer simulated environment.

Industrial environments include plurality of machines or assets in an automated factory, or IoT devices interacting with one another. Industrial environments thus often include multiple interconnected components in signal communication with each other, either directly or across a network. An emerging concept complementing the rapid industrial development is "the industrial metaverse". The industrial metaverse is a next generation of fully immersive three-dimensional collaborative space that integrates multiple technical directions such as digital twin, internet of things, industrial internet, augmented reality, virtual reality, mixed reality, and the like. Metaverse is a virtual universe with shared, 3D virtual spaces where virtual assets can be owned, placed and interacted with. It also allows different users to interact with each other in the collaborative environment. These virtual assets can be simple entities like chair or table, or complex entities like industrial machinery.

For this purpose, a typical Industrial Internet of Things (IIoT) solution in a metaverse would include building a digital twin of one or more assets in the industrial environment. A digital twin can, for example, represent a real-world power plant, a car, or an aircraft and replicates the features and parameters of the same. The industrial metaverse is a virtual space to experience digital twins. Multiple users can enter and collaborate individually or as a group. Interaction and immersion are prerequisites to improve the user experience in the metaverse and this is achieved via augmented reality (AR) and virtual reality (VR). These technologies require the use of hardware devices like AR glasses which provide the wearer with an immersive 3D experience. AR can blend in virtual objects with real world objects, like placing a virtual table in a real room whereas VR can create a complete virtual world.

One major challenge arises in the industrial metaverse is the access to multiple users in a controlled and permissioned manner. The access to multiple virtual assets in the industrial metaverse spaces are permissioned and access needs to be regulated., for example, only employees of a particular organization and some specific customers should be allowed to experience the digital twins in the industrial metaverse specific to that particular organization. There may be intellectual property or some proprietary information associated with a particular digital twin of an asset that needs to be safeguarded., for example, if a new prototype of a machine is being designed in the metaverse, only the team members working on it should be able to access it. Since these users utilize AR devices to interact with the model in the metaverse, access control needs to be implemented not only at the user level, but also at the device level. This would prevent the use of stolen devices by non-users, and also deter the use of unauthorized devices (which might be susceptible to various software and hardware vulnerabilities, and it is difficult to analyze and certify all the devices from different manufacturers). Even after authenticating a user-device pair, if the device is handed to an unauthorized person, security breach can occur. Detecting and mitigating such access control violations is a challenge. Currently there are no systems that solve the abovementioned challenges in the industrial metaverse in a secure and seamlessly interoperable manner.

In light of the above, there exists a need for detecting access violations in a computer simulated environment in a timely and accurate manner as disclosed.

Therefore, it is an object of the present invention to provide a system, apparatus and method for detecting access violations in a computer simulated environment.

Throughout the present disclosure, the term "industrial environment" may refer to plurality of industrial assets connected with each other to achieve a function. The industrial environment may be comprised of industrial assets such as industrial machines, industrial devices, industrial controllers, and so forth.

Throughout the present disclosure, the term "one or more assets" as used herein refers to any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

Throughout the present disclosure, the term "computed simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be, for example, a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

The metaverse may comprise a plurality of computer-simulated components. The computer simulated components can, for example, be understood as a representation, in particular, a 3D representation, of a real or physical component. A component can, for example, be a room, a building, an item, or an object. The computer-simulated component can have different functionalities/features, e.g., an access interface. The computer-simulated component further comprises data that are component-specific, e.g., sensor data of a virtual sensor, that can be retrieved, for example, via the access interface. An access to a computer-simulated component can, for example, comprise usage, modification, connection to other computer-simulated components, etc. The computer-simulated component can interact with the computer-simulated environment. For the purpose of this invention, the computer-simulated component may be a digital twin or a plurality of digital twins in the computer simulated environment or metaverse.

The metaverse can be realized by a hosting environment. The hosting environment can be, for example, be implemented as a cloud environment, an edge-cloud environment and/or on specific devices, e.g., mobile devices.

Throughout the present disclosure, the term "distributed network" as used herein refers to a network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

Throughout the present disclosure, the term "digital twin/virtual asset" as used herein refers to digital copy of a physical item (e.g., a real machine) that is created to support data access, command and control, remote configuration, as well as simulation and analytics. A virtual asset is commonly created simultaneously with the real devices and systems, such as processing equipment and sensors in the facility. Once created by a specific vendor for their own specific equipment, the virtual asset can be used to represent the machine in a digital representation of a real world system. The DT is created such that it is identical in form and behavior to the corresponding machine. virtual assets may be supported by the vendors' own IIoT infrastructure. Thus, each virtual asset is associated with one and only one asset. A customer deploying IIoT may thus end up having many such virtual assets deployed on a wide variety of infrastructures because IIoT vendors generally host their solutions on a variety of different cloud platforms (e.g. Microsoft AZURE, Amazon AWS, their own- or third-party data center), and may use a wide variety of open source and other components to create their digital twin/ virtual asset solutions.

Throughout the present disclosure, the term "user" as used herein refers to any person, avatar, virtual assistant, or any other device or system configured to raise request to the apparatus for accessing control of the virtual assets and interact therewith.

The object of the present invention is achieved by a method for detecting access violations in a computer simulated environment. The method comprises authenticating, by a processing unit, a user-device pair connection in the computer simulated environment pertaining to the user and the corresponding device based on a user identity registry and a device identity registry respectively and a predefined mapping therebetween.

According to an embodiment, the method of authenticating the user-device pair connection comprises verifying identity of the user based on a user identity module comprising the user identity registry.

According to an embodiment, the method of authenticating the user-device pair connection further comprises verifying identity of the device based on a device identity module comprising the device identity registry.

The method comprises continuously verifying, by the processing unit, the user-device pair connection for a time period when the user is connected to the computer simulated environment based on behavioral data of the user acquired from one or more sensors on the device.

According to an embodiment, the method of continuously verifying the user-device pair connection based on behavioral data of the users acquired from the one or more sensors on the device further comprises. generating a behavior matrix of each user in the computer simulated environment based at least one of: biometric data, hand gesture data, eye movement data, head gesture data, geolocation data, and contextual data with respect to gestures of the users. Further, the method comprises continuously verifying the user-device pair connection based on the generated behavior matrix using a continuous verification module.

According to an embodiment, the method of continuously verifying the user-device pair connection comprises verifying the identity of the user using a soft certificate associated with the user-device pair.

The method comprises detecting an access violation in the computer simulated environment when either the authentication of the user-device pair fails or the continuous verification of the user-device pair connection fails.

According to an embodiment, the method of detecting access violations further comprises verifying, by the processing unit, an access level associated with the user-device pair in the computer simulated environment based on predefined access levels associated with each zone in the computer simulated environment using a multi-factor authentication module. Further, the method comprises detecting, by the processing unit, an access violation in the computer simulated environment when a zone that a particular user-device pair is attempting to access does not match the access level assigned to the user-device pair.

According to an embodiment, the method detecting violations further comprises revoking access of the user-device pair when the access violation is detected in the computer simulated environment.

The object of the invention is also achieved by an apparatus for detecting access violations in a computer simulated environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for detecting access violations in a computer simulated environment. The system comprises a computer simulated environment hosting a plurality of virtual assets. Herein, each of the virtual assets are associated with one or more assets in the industrial environment. The system comprises a distributed network communicatively coupled to the computer simulated environment. Herein, the distributed network comprises one or more nodes for storing identification information of one or more entities. The system further comprises the apparatus as mentioned above. The apparatus is communicatively coupled to the distributed network and the computer simulated environment. The apparatus is configured for detecting control violation in the computer simulated environment according to the aforementioned method steps.

The object of the invention is also achieved by a computer program product comprising machine readable instructions, that when executed by one or more processing units, cause the one or more processing units to perform the aforementioned method steps.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.
FIG 1 illustrates a block-diagram of a system for detecting access violations in a computer simulated environment, in accordance with an embodiment of the present invention;
FIG 2 is a block diagram of an exemplary distributed ledger implemented for detecting access violations in a computer simulated environment, according to an embodiment of the present invention;
FIG 3 is a block diagram of an exemplary apparatus for detecting access violations in a computer simulated environment, according to an embodiment of the present invention;
FIG 4 is a flowchart depicting steps of a method for detecting access violations in a computer simulated environment, according to an embodiment of the present invention; and
FIG 5 is an exemplary system workflow for detecting access violations in a computer simulated environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

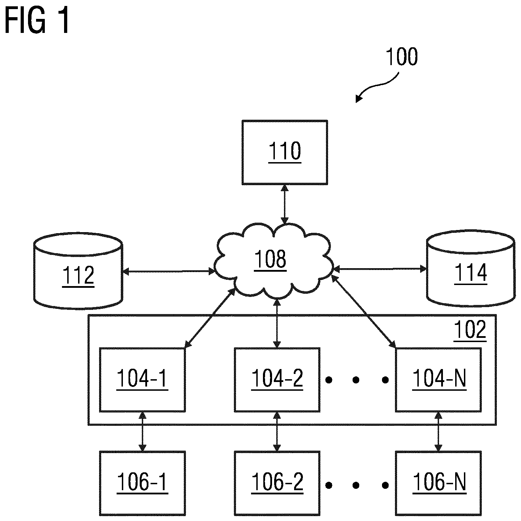

FIG 1 is a block diagram of a system 100 for detecting access violations in a computer simulated environment, according to an embodiment of the present invention. The system 100 comprises a computer simulated environment 102 hosting a plurality of virtual assets 104-1 to 104-N, one or more assets 106-1 to 106-N corresponding to each virtual asset 104-1 to 104-N, and an apparatus 110 communicating over a communication network 108. The system also comprises a user identity registry 112 and a device identity registry 114. In particular, the plurality of virtual assets 104-1 to 104-N corresponding to one or more assets 106-1 to 106-N are collaborating with one another in the metaverse to realize the virtual asset or an industrial digital twin. The one or more assets may be associated with a client device (not shown). Non-limiting examples of client devices include, personal computers, workstations, personal digital assistants, human machine interfaces. The client device may enable an owner or operator of the one or more assets to view digital certificates, permissions, access requests etc. associated therewith.

The computer simulated environment 102 is a three-dimensional (3D) representation of a real or physical world. It can be understood as a virtual world representing one or more assets 104-1 to 104-N of the real-world such as machines, robots, conveyors, cranes, drills, etc.

The computer-simulated environment 102 is accessible by a user, i.e., it is accessible from the real/physical world. In particular, the computer-simulated environment 102 can be understood as the "metaverse" or sometimes referred to as the "industrial metaverse" hereinafter. It is also possible to interact with the computer-simulated environment 102, i.e., to influence or use processes, components and/or functions in the computer-simulated environment 102. The user or the avatar may interact with the objects rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more virtual assets 104-1 to 104-N rendered corresponding to the one or more assets 106-1 to 106-N interacting in the industrial environment. The metaverse may comprise a plurality of computer-simulated components. The computer simulated components can, for example, be understood as a representation, in particular a 3D representation, of a real or physical component. A component can, for example, be a room, a building, an item, or an object. The computer-simulated component can have different functionalities/features, e.g., an access interface. The metaverse can be realized by a hosting environment. The hosting environment can be, for example, be implemented as a cloud environment, an edge-cloud environment and/or on specific devices, e.g., mobile devices.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 110 may include a module for detecting access violations of one or more virtual assets 104-1 to 104-N interacting in a computer simulated environment over a distributed network.

Particularly, the system 100 comprises a cloud computing device configured for providing cloud services for managing access control violations for a plurality of virtual assets 104-1 to 104-N interacting in a computer simulated environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

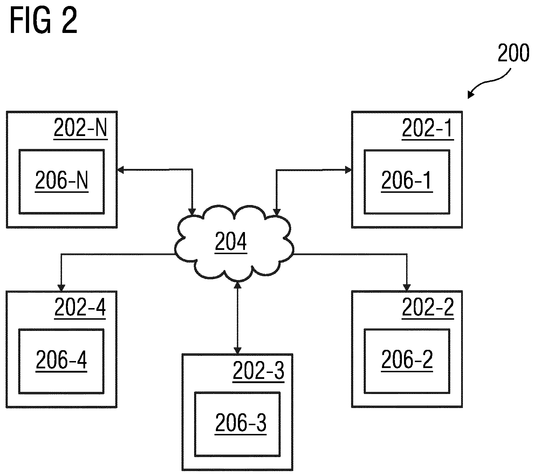

In an exemplary embodiment, the system 100 is implemented as a distributed ledger, wherein distributed ledger has nodes. Each node may belong to an entity and each of the nodes use the cloud computing hardware and OS to perform one or more actions in the distributed ledger. Each of the nodes comprise a computing device having a module and a database. One such exemplary embodiment is explained in further detail in conjunction with FIG 2.

FIG 2 is a block diagram of an exemplary distributed ledger 200 implemented using the system for detecting access violations of the one or more virtual assets 104-1 to 104-N interacting in a computer simulated environment 102, according to an embodiment of the present invention. In particular, the one or more distributed ledgers 200 (e.g., blockchain network) may be provided across one or more entities over a network 204. Exemplary entities 202-1 to 202-N, parties to a transaction, individual computing devices associated with one or more contractors, operators, verifying authorities, shared computing resources, smart devices (e.g., smartwatches, tablets, smartphones), and so on. The entities 202-1 to 202-N may store the distributed ledgers on computing systems which may be utilized in maintaining and/or updating the distributed ledgers. Each entity 202-1 to 202-N may be configured for storing a version of the distributed ledger or a portion thereof.

In some examples, the distributed ledger 200 is a blockchain based ledger wherein events and transactions are verified by the network participants in a decentralized manner and recorded on all participant nodes. Every node is identified by its address which is in turn derived from its public-private key pair. All data is recorded on the blockchain and accessible to all participants. This information is immutable and hence provides accountability and audit trails. Blockchain network (achieved via distributed consensus mechanisms) ensures that no single entity can control the network and as long as majority of the participants are honest, the network will function in a fair and unbiased manner. Blockchain also supports smart contracts which allows the business logic to be encoded in the form of a deterministic computer program. This program is executed in an isolated secure environment on all nodes and verified in a distributed manner.

In some embodiments, the entities 202-1 to 202-N include at least a set of computing devices 206-1 to 206-N., for example, a ledger may be stored on a large number of publicly available devices, each acting as a "node" for storing a copy of the ledger (e.g., being collaboratively maintained by anonymous peers on a network). In some embodiments, the ledger is only stored and maintained on a set of trusted "nodes", such as the computing systems of authorized users. In some embodiments, a combination and/or a "mix" of both trusted nodes and public nodes may be utilized, with the same and/or different rules being applied to activities performed at each (e.g., a different validation process may be used for untrusted nodes, or simply untrusted nodes may be unable to perform certain activities). In some embodiments, there may be different levels of nodes with differing characteristics and applied business logic.

The ledgers, ledger entries, and/or information stored on the ledger entries may be used for asset information, contract information, contractor information, operator information and so forth. Furthermore, the ledger may store digital certificates generated by the first entity and second entity, operational requirements of the assets, transactions involving different entities, automated "smart contracts" relating to control of assets and so forth. Smart contracts are computer instructions or code intended to facilitate, verify, or enforce the negotiation or performance of a contract. Further, the ledger and ledger entries may utilize encryption technology to facilitate and/or validate digital signatures, for example, facilitating multi-signature documentation, ensuring the authenticity and integrity of assets, operators, and so on.

Each of the one or more entities 202-1 to 202-N may have, at various times, versions of the ledger, and the ledger may be maintained through the propagation of entries and/or updates that may be copied across ledgers. Ledger entries may contain elements of information (e.g., transaction records, document content, contract clauses, versioning information). There may be various rules and/or logic involved in activities relating to the ledger entries (e.g., creating, updating, validating), for example, a supermajority or a unanimous consent between entities may be enforced as a condition to an activity relating to an entry. In some embodiments, distributed ledgers are utilized, and the ledger entries are adapted to have various linkages to one another such that the integrity of the ledger entries can be reinforced and/or validated.

The ledger may be maintained through, for example, a "distributed network system", the distributed network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

For example, a distributed ledger may be distributed across entities 202-1 to 202-N and used to provide control access of an asset to other assets, operators, or other entities in a secure manner. The distributed ledger may have entries linked to one another using cryptographic asset information, contractor information, operator information, and entries in the blockchain may be ordered, time stamped, and/or associated with metadata such that the blockchain is designed for protection against "double" transfers and unauthorized modification of ledger entries, such as violation of policies.

In some embodiments, each block includes respective unique identifiers associated with one or more entities 202-1 to 202-N along with corresponding transaction data. The block also includes a timestamp indicating when the block was created. If there is more than one block in the blockchain, each block beyond a first block further includes a hash of a previous block in the blockchain.

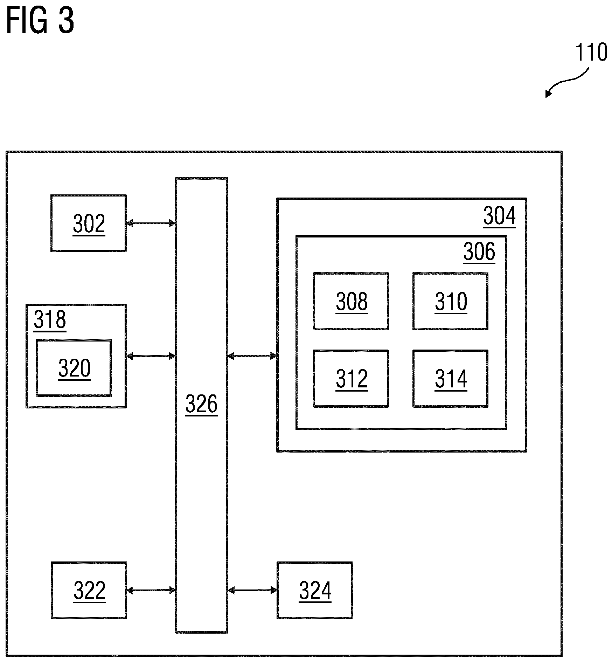

FIG 3 is a block diagram of an exemplary apparatus 110 for detecting access violations of one or more virtual assets interacting in a computer simulated environment, according to an embodiment of the present invention. The apparatus 110 may also be associated with different nodes in the distributed ledger to generate a decentralized network of one or more entities 202-1 to 202-N in the industrial environment. In an exemplary embodiment, the apparatus 110 is communicatively coupled to the one or more virtual assets 104-1 to 104-N in the computer simulated environment 102. In another exemplary embodiment, specific to a blockchain network, the apparatus 110 is integrated with the computing devices 202-1 to 202-N of FIG 2) associated with the nodes 202-1 to 202-N.

The apparatus 110 may be a personal computer, a laptop computer, a tablet, a server, a virtual machine, and the like. The apparatus 110 includes a processing unit 302, a memory 304 comprising a module 306, a storage unit 318 comprising a database 320, an input unit 322, an output unit 324 and a bus 326.

The processing unit 302 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory 304 may be non-transitory volatile memory and/or non-volatile memory. The memory 304 may be coupled for communication with the processing unit 302, such as being a computer-readable storage medium. The processing unit 302 may execute instructions and/or code stored in the memory 304. A variety of computer-readable instructions may be stored in and accessed from the memory 304. The memory 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 304 includes the module 306 stored in the form of machine-readable instructions on any of the above-mentioned storage media and may be in communication to and executed by the processing unit 302. When the machine-readable instructions are executed by the processing unit 302, the module 306 causes the processing unit 302 to verify the authenticity of the user-device pair connection when the user is either entering into the metaverse or during the interaction with the one or more virtual assets 104-1 to 104-N.

The module 306 further comprises a user-device pair authentication module 308, a continuous authentication module 310, a multi-factor authentication module 312, and an access violation detection module 314.

The user-device pair authentication module 308 is configured for authenticating users interacting in the computer simulated environment 102 (or the metaverse 102), the devices corresponding to the users in the computer simulated environment 102, and the user-device pair connections in the computer simulated environment 102. The user-device pair authentication module 308 is configured for authenticating the users in the metaverse based on user information stored in the user identity registry 112. The user-device pair authentication module 308 is configured for authenticating the devices based on device information stored in the device identity registry 114. Furthermore, the user-device pair connection module 308 is configured for identifying a predefined mapping between the users and corresponding devices and authenticating the user-device pair connection based on the predefined mapping.

The continuous authentication module 310 is configured for continuously verifying the user-device pair connection for a time period when the user is connected to the computer simulated environment based on behavioral data of the user acquired from one or more sensors on the device. The continuous authentication module 310 is configured for generating a behavior matrix of each user in the computer simulated environment based at least one of: biometric data, hand gesture data, eye movement data, head gesture data, geolocation data, and contextual data with respect to gestures of the users. Further, the continuous authentication module 310 is configured for continuously verifying the user-device pair connection based on the generated behavior matrix. Furthermore, the continuous authentication module 310 is configured for continuously verifying the user-device pair connection comprises verifying the identity of the user using a soft certificate associated with the user-device pair.

The multi-factor authentication module 312 is configured for verifying an access level associated with the user-device pair in the computer simulated environment based on predefined access levels associated with each zone in the computer simulated environment.

The access violation detection module 314 is configured detecting an access violation in the computer simulated environment when the authentication of the user-device pair fails. The access violation detection module 314 is configured detecting an access violation in the computer simulated environment the continuous verification of the user-device pair connection fails. The access violation detection module 314 is configured for detecting an access violation in the computer simulated environment when multi-factor authentication fails. Further, the access violation is detected when a zone that a particular user-device pair is attempting to access does not match the access level assigned to the user-device pair.

The processing unit 302 is configured for performing all the functionality of the module 306. The processing unit 302 is configured to authenticate a user-device pair connection in the computer simulated environment pertaining to the user and the corresponding device based on a user identity registry and a device identity registry respectively and a predefined mapping therebetween. The processing unit 302 is configured to continuously verify the user-device pair connection for a time period when the user is connected to the computer simulated environment based on behavioral data of the user acquired from one or more sensors on the device. The processing unit 302 is configured to detect an access violation in the computer simulated environment when either the authentication of the user-device pair fails or the continuous verification of the user-device pair connection fails.

The storage unit 318 comprises the database 320 for user identity registry, device identity registry, behaviour matrix, user-device mapping and so forth. The storage unit 318 and/or database 320 may be provided using various types of storage technologies, such as solid state drives, hard disk drives, flash memory, and may be stored in various formats, such as relational databases, non-relational databases, flat files, spreadsheets, and extended markup files, etc.

The input unit 322 may provide ports to receive input from input devices such as keypad, touch-sensitive display, camera (such as a camera receiving gesture-based inputs), etc. capable of receiving access requests, authorization requests, etc. the The display unit 324 may provide ports to output data via output device with a graphical user interface for displaying the plurality of digital twins in the computer simulated virtual environment. The bus 326 acts as interconnect between the processing unit 302, the memory 304, the storage unit 318, the input unit 322, and the display unit 324.

Those of ordinary skilled in the art will appreciate that the hardware depicted in FIG 3 may vary for particular implementations., for example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

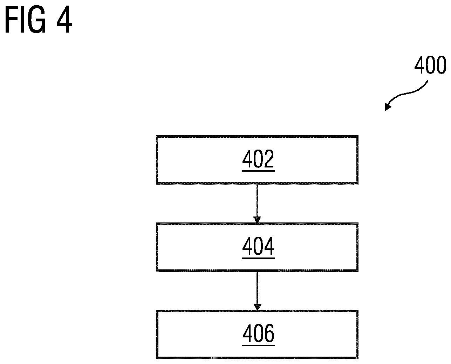

FIG 4 is a flowchart depicting steps of a method 400 for detecting access violations in a computer simulated environment, according to an embodiment of the present invention.

The virtual assets 104-1 to 104-N may correspond to real-world objects in the industrial environment such as the one or more assets 106-1 to 106-N including but not limited to motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc.

The virtual assets 104-1 to 104-N are commonly generated simultaneously with the real devices and systems, such as processing equipment and sensors in the facility. Once created by a specific vendor for their own specific equipment, the virtual asset can be used to represent the assets in a digital representation of a real world system. The virtual asset is created such that it is identical in form and behavior to the corresponding machine. The virtual asset thus generated may be a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on.

The plurality of virtual assets 104-1 to 104-N can be visualized in the computer simulated virtual environment, for example, in the metaverse. It can be understood as a virtual world of the industrial environment wherein the plurality of virtual assets 104-1 to 104-N are interacting with one another. Such virtual assets 104-1 to 104-N are in particular accessible by the user, i.e. virtual assets 104-1 to 104-N accessible from the real/physical world., for example, it is possible that the user can access the plurality of virtual assets 104-1 to 104-N in the metaverse via an interface, e.g., a virtual reality (VR) or augmented reality (AR) interface. The counterpart of the computer-simulated environment does not necessarily have to exist but can be, for example, a three-dimensional model of an asset in the industrial environment.

For the present invention, the user in the metaverse visualizes the one or more virtual assets by entering into metaverse through the device. In other words, the user requires a device (or a hardware device) to access and visualize the virtual assets in the metaverse. The users in the metaverse refer to individuals who participate in and interact with the virtual assets in the industrial metaverse. Users engage with the metaverse through various devices, such as VR, headsets, AR glasses, MR headsets, holographic displays, smartphones, tablets, or personal computers, accessing virtual environments, experiences, and services. In an example, the device may be a virtual reality (VR) headset such as Oculus Quest 2, HTC Vive Pro 2, Sony PlayStation VR, Valve Index etc. In another example, the device may be an augmented reality (AR) headset such as Microsoft HoloLens 2, Magic Leap One, Google Glass Enterprise Edition 2, Epson Moverio BT-300, etc. The devices comprise sensors to track users' movements, gestures, and interactions, as well as to provide environmental feedback for a more immersive experience. In an example, the sensors in the device may include accelerometers, gyroscopes, magnetometers, proximity sensors, depth sensors, time of flight sensors, eye tracking sensors, inertial measurement units (IMUs), cameras, and so on.

At step 402, a user-device pair connection in the computer simulated environment pertaining to the user and the corresponding device is authenticated based on a user identity registry and a device identity registry respectively and a predefined mapping therebetween. In an embodiment, the method comprises verifying an identity of the user based on user information in the user identity registry 112 using a user-device pair authentication module 308. The user identity registry 112 maybe a centralized or a decentralized database that stores and manages information about identities of the users that may access the virtual assets in the metaverse. The user identity registry 112 serves as a repository for storing user identities, attributes, credentials, and access permissions, enabling efficient authentication, authorization, and identity verification processes. In an example, the user identity registry 112 may store user profiles. Each user identity is associated with a profile containing relevant information such as name, email address, contact details, role, organizational affiliation, and other attributes. Furthermore, the user identity registry 112 may also store authentication credentials such as usernames, passwords, cryptographic keys, biometric data, or other forms of credentials used to verify a user's identity during the authentication process. The user identity registry 112 may also store access control lists (ACLs) or access policies that specify the permissions and privileges granted to each user identity, determining what virtual assets or what functionalities of the virtual assets are allowed to access for a specific user. In some examples, the user identity registry 112 may also be integrated with external identity providers such as single sign-on (SSO) services, social media platforms, or enterprise identity management systems to federate user identities across different systems and applications.

In an embodiment, the method comprises verifying identity of the device based on device information in the device identity registry using the user-device pair authentication module 308. The device identity registry 114 maybe a centralized or a decentralized database that stores and manages information about electronic devices within a specific network, organization, or ecosystem. It serves as a repository for recording unique identifiers, attributes, configurations, and access permissions associated with each device, enabling efficient management, monitoring, and control of devices within the system. The device identity registry 114 stores device identifiers assigned to each device such as a serial number, MAC address, IMEI (International Mobile Equipment Identity) number, or UUID (Universally Unique Identifier), which distinguishes it from other devices in the registry. The device identity registry 114 stores metadata and descriptive attributes associated with each device, such as device type, manufacturer, model, firmware version, hardware specifications, location, ownership information, and operational status. The device identity registry 114 may also store cryptographic keys, certificates, or other authentication credentials associated with each device, ensuring that only authorized devices can access network resources or services.

The device identity registry 114 may also store access policies that specify the permissions and privileges granted to each device, determining what resources or functionalities they are allowed to access within the system or network.

In an embodiment, the method further comprises defining a mapping between each of the users and corresponding devices. The mapping is stored in the database and then the user-device pair connection is authenticated based on the predefined mapping. In an example, when a user enters into the metaverse or tries to access the virtual assets 104-1 to 104-N in the metaverse, first the user is verified using user credentials and other attributes stored in the user identity registry 112. Further, the device associated with the user is also verified using device credentials and other attributes stored in the device identity registry 114. Once the user and the device are verified, the method further comprises verifying that the user and the corresponding device requesting access are mapped to each other based on the predefined mapping. The user-device pair connection is authenticated only if the predefined mapping is verified.

At step 404, the user-device pair connection is continuously verified for a time period when the user is connected to the computer simulated environment based on behavioral data of the user acquired from one or more sensors on the device. The user-device pair connection is continuously verified in the metaverse in real-time. The behavioral data of the users include actions, interactions, preferences, and behaviors within the metaverse. In an embodiment, the method of continuously verifying the user-device pair connection based on behavioral data of the users acquired from the one or more sensors on the device further comprises generating a behavior matrix of each user in the computer simulated environment based at least one of: biometric data, hand gesture data, eye movement data, head gesture data, geolocation data, and contextual data with respect to gestures of the users. The behavior matrix behavior matrix for users in the metaverse is a structured representation of user interactions, activities, and engagements within the metaverse. The behavioral data is organized into a matrix format, where rows represent individual users, and columns represent different dimensions or aspects of user behavior. Each cell in the matrix contains data corresponding to a specific user's behavior for a particular dimension or variable. In an example, the behaviour data may also include biometric data parameters like Biometric Templates or Feature Vectors and for voice it can store some features like MFCC (Mel-frequency cepstral coefficients), Pitch and Fundamental Frequency (F0) etc. The behavioral data maybe acquired form one or more sensors in the devices associated with the users. Therefore, behavioral data comprises parameters like accelerometer/gyro-meter data for head movement, pupil detection and gaze movement for eye tracking and gesture data (e.g., hand shape, motion trajectory) for gesture detection. Furthermore, the behavior data comprises data from sensors for unique eye movement patters. It is to be noted that every individual has a unique eye movement pattern and their respective AR/VR devices can track these patterns and generate behavioral patterns therefrom. The behavioral data further includes contextual data of the users and their surrounding environment in the metaverse. In an example, the sensors may analyze the context of eye movements, such as the focus duration on specific elements of the user within the AR/VR environment. Advantageously, contextual data enhances the accuracy of continuous authentication. Furthermore, the behavioral data comprises of comprises behavioral biometrics, such as unique patterns in the user's gestures or movements, for continuous authentication. Furthermore, the behavioral data also inculdes voice data from one or more sensors in the devices. In an example, AR/VR devices can employ voiceprint recognition technology to create a unique digital representation of a user's voice. Users can enroll their voiceprints, and subsequent interactions involve continuous comparison against this stored voiceprint for continuous authentication. In another example, continuous authentication through passive voice analysis involves constantly listening to the user's voice during AR/VR interactions. Algorithms analyze speech patterns, pitch, cadence, and other voice characteristics in real-time to ensure the user's identity remains consistent. In another example, monitoring subtle changes in the user's voice behavior, such as accent, intonation, or speech rhythm, can contribute to continuous authentication. Algorithms learn and adapt to these patterns over time to maintain authentication without active user involvement. In another example, the behaviour data also comprises contextual voice data. In an example, considering the context of the user's interaction, such as the environment's noise level or the user's emotional state detected through voice analysis, can enhance the accuracy of continuous authentication. It should be noted that all the behavior data acquired from the one or more sensors in the devices are then analyzed and a behavior matrix is generated. In an embodiment, the method comprises continuously verifying the user-device pair connection based on the generated behavior matrix using the continuous authentication module 310. In another embodiment, the method verifying the identity of the user using a soft certificate associated with the user-device pair.

At step 406, an access violation is detected in the computer simulated environment when either the authentication of the user-device pair fails or the continuous verification of the user-device pair connection fails. The user-device pair connections are continuously verified based on the behavior matrix as described above. The access violation is detected in the metaverse when user-device pair connection fails authentication. In an embodiment, the the method further comprises verifying an access level associated with the user-device pair in the computer simulated environment based on predefined access levels associated with each zone in the computer simulated environment using a multi-factor authentication module. The metaverse comprises multiple virtual assets that may or may not be accessible to all users alike. Therefore, the entire metaverse may be divided into different zones and an access level is associated with each of the zones. Similarly, each of the virtual assets can also be assigned to an access level based on the confidentiality level of the information displayed in the virtual assets. The method comprises detecting an access violation in the computer simulated environment when a zone that a particular user-device pair is attempting to access does not match the access level assigned to the user-device pair. In an embodiment, the method further comprises revoking access of the user-device pair when the access violation is detected in the computer simulated environment.

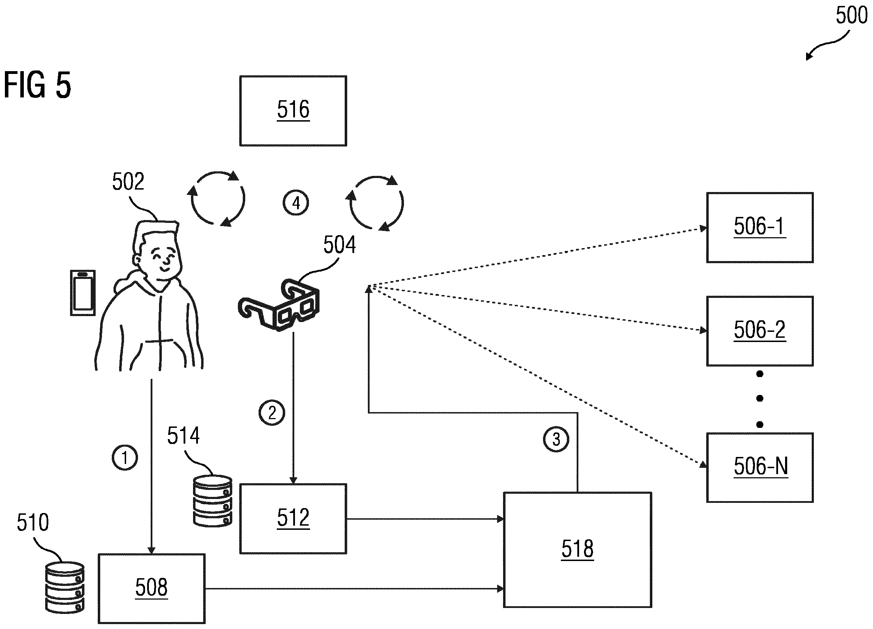

FIG 5 is an exemplary system workflow 500 for detecting access violations in a computer simulated environment, according to an embodiment of the present invention. As maybe seen, exemplary system 500 comprises a user 502, a device 504 corresponding to the user 502, one or more virtual assets 506-1 to 506-N visualized by the user 502 using the device 504, a user authentication module 508 comprising a user identity registry 510, a device authentication module 512 comprising a device identity registry 514, a continuous authentication module 516, and a multi-factor authentication module 518. When the user 502 enters the metaverse to access the virtual assets 506-1 to 506-N, at step (1) the identity of the user 502 is verified using the user authentication module 508. The user authentication module 508 employing the user identity registry 510 in order to verify the user credentials. User can be authenticated in different ways like username-password, private key, certificate, etc. At step (2), the device 504 is authenticated using the device authentication module 512 employing the device identity registry 514 in order to verify the device credentials. Every AR/VR device has a unique identifier which can used to derive a unique identity. There are several methods for obtaining unique device identifiers from wearable devices. A unique identifier can be retrieved for HoloLens or Windows devices using the *SystemIdentification* library. Similarly, an Android device can be identified by its MAC address, serial number, Secure Android ID, UUID, etc. Every device is analyzed for security flaws and its details are stored in the device registry 514. At step (3), the multi-factor authentication module 518 verifies that the user-device pair meets the access level that is being requested for access by the user 502. The multi-factor authentication may be static authentication (pre-defined) or dynamic authentication (defined as per the context in the metaverse). At step (4), the user-device pair connection is continuously authenticated using the continuous authentication module 516. Once the multi-factor authentication allows access to the user-device pair to access the virtual assets, the continuous authentication module 516 continuously monitors whether the user and device are still paired when connected to the metaverse. The user stores a soft certificate on his device. This can be a session certificate which needs to be renewed periodically. Continuous authentication can be performed using this certificate. Additionally, if the user is in possession of a location-enabled device, that can be used to track his location and validate his identity when he is within secure locations. The behavior of users (e.g., movement patterns) is analyzed to create unique behavioral patterns for each user. The unique behavioral patterns are used to identify and authenticate the user in real time. Once a user-device pair is authenticated, it is ensured that the pair is not broken, i.e., the device is not handed to another unauthorized user. This is achieved by using the sensors located on the device itself. Head/Eye/Hand Tracking. If the device has visible light and infrared cameras for head, hand and/or eye tracking, we can use them to ensure that the device is not removed from the head of the authenticated user (for example, when head/eye tracking stops working for some time) or the user has not changed (for example, when the size/shape of the hands change). If the device has an inertial measurement unit (IMU) such as an accelerometer, gyroscope and magnetometer, we can use to detect sudden changes in device orientation (e.g., sudden upward movement when a user removes the device). If no such events are detected, the user-device are still paired. Some devices have built-in voice recognition functions. This can be used to detect if the person using the device has changed. The user authentication module 508, the device authentication module 512, the continuous authentication module 516, and the multi-factor authentication module 518 ensure that the user-device pair connection is authorized and continuously tracked such that unauthorized users or devices are not allowed to access virtual assets in the metaverse.

Advantageously, the present invention provides a decentralized, secure, and efficient system for managing access control for a plurality of virtual assets 104-1 to 104-N interacting in a computer simulated environment. Beneficially, the abovementioned method and system ensures digital rights management of a plurality of virtual assets 102-1 to 102-N in the industrial environment. The present invention ensures that the users and their associated devices are monitored continuously in real-time such that there is no unauthorized entry into the computer simulated environment. Furthermore, the present invention also enables seamless interoperability with existing systems, hence making the solution easy to integrate with existing systems. Advantageously, the present invention ensures that the user-device pair connection are continuously authenticated in the computer simulated environment using the sensors located on the device itself ensuring that the user-device pair connection is not broken. This makes sure that no unauthorized users are given access to confidential information represented or stored in the virtual assets. Furthermore, the present invention also ensures that the access to the virtual assets is authenticated based on muti-factor authentication including both static and dynamic authentication of the user-device pair. Beneficially, static authentication ensures that the user-device pair is allowed to access virtual assets based on anauthorization/access level of the users. Advantageously, the dynamic authentication ensures that the user-device pair is allowed to access the infromation that is needed as per an activity of context of a particular scenario in the computer simulated environment.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102: computer simulated environment
- 104-1 to 104-N: plurality of virtual assets
- 106-1 to 106-N: one or more assets
- 108: communication network
- 110: apparatus
- 200: distributed ledger
- 202-1 to 202-N: one or more entities
- 204: network
- 206-1 to 206-N: one or more computing devices
- 302: one or more processing units
- 304: memory unit
- 306: module
- 308: user-device pair authentication module
- 310: continuous authentication module
- 312: a multi-factor authentication module
- 314: access violation detection module
- 318: storage unit
- 320: database
- 322: input unit
- 324: output unit
- 326: bus
- 400: flowchart depicting steps of a method for detecting access violations in a computer simulated environment
- 500: exemplary system workflow for detecting access violations in a computer simulated environment

## Claims

1. A computer-implemented method (400) for detecting access violations in a computer simulated environment (102), the method comprising:
authenticating, by a processing unit (302), a user-device pair connection in the computer simulated environment (102) pertaining to the user (502) and the corresponding device (504) based on a user identity registry (112) and a device identity registry (114) respectively and a predefined mapping therebetween;
continuously verifying, by the processing unit (302), the user-device pair connection for a time period when the user (502) is connected to the computer simulated environment (102) based on behavioral data of the user (502) acquired from one or more sensors on the device (504); and
detecting, by the processing unit (302), an access violation in the computer simulated environment (102) when either the authentication of the user-device pair fails or the continuous authentication of the user-device pair connection fails.

2. The method (400) according to claim 1, wherein authenticating the user-device pair connection comprises verifying an identity of the user (502) based on user information in the user identity registry using a using the user-device pair authentication module (308).

3. The method (400) according to claim 1, wherein authenticating the user-device pair connection further comprises verifying an identity of the device (504) based on device information in the device identity registry (114) using the user-device pair authentication module (308).

4. The method according to any of the claims 1 to 3, further comprising:
verifying, by the processing unit (302), an access level associated with the user-device pair in the computer simulated environment (102) based on predefined access levels associated with each zone in the computer simulated environment using a multi-factor authentication module (312);
detecting, by the processing unit (302), an access violation in the computer simulated environment (102) when a zone that a particular user-device pair is attempting to access does not match the access level assigned to the user-device pair.

5. The method according to any of the claims 1 to 4, wherein continuously verifying the user-device pair connection based on behavioral data of the users (502) acquired from the one or more sensors on the device (504) further comprises:
generating, by the processing unit (302), a behavior matrix of each user in the computer simulated environment (102) based at least one of: biometric data, hand gesture data, eye movement data, head gesture data, geolocation data, and contextual data with respect to gestures of the users; and
continuously verifying, by the processing unit (302), the user-device pair connection based on the generated behavior matrix using a continuous verification module (310).

6. The method (400) according to any of the claims 1 to 5, wherein continuously verifying the user-device pair connection comprises verifying the identity of the user using a soft certificate associated with the user-device pair.

7. The method (400) according to any of the claims 1 to 6, further comprising:
revoking access of the user-device pair when the access violation is detected in the computer simulated environment (102).

8. An apparatus (110) for detecting access violations in a computer simulated environment (102), the apparatus (110) comprising:
one or more processing units (302); and
a memory (304) communicatively coupled to the one or more processing units (302), the memory (304) comprising a module (306) stored in the form of machine-readable instructions executable by the one or more processing units (302), wherein the module is configured to perform the method (400) steps according to claims 1 to 7.

9. A system (100) for detecting access violations in a computer simulated environment (102), the system comprising:
a computer simulated environment (102) hosting a plurality of virtual assets (104-1 to 104-N), wherein each of the virtual assets correspond to one or more assets (106-1 to 106-N) in an industrial environment;
a distributed network (108) communicatively coupled to the computer simulated environment (102), wherein the distributed network comprises one or more nodes (202-1-202-N) for storing identification information of users and/or devices; and
an apparatus (110) according to claim 8, communicatively coupled to the distributed network (108) and the computer simulated environment, wherein the wherein the apparatus (110) is configured for detecting access violations in a computer simulated environment (102), according to any of the method claims 1 to 7.

10. A computer-program product, having computer-readable instructions stored therein, that when executed by a processing unit (302), cause the processing unit (302) to perform method (400) steps according to any of the claims 1 to 7.
